(19) Europäisches Patentamt
European Patent Office
Office européen des brevets

(11) Veröffentlichungsnummer: **0 208 844 B1**

(12) **EUROPÄISCHE PATENTSCHRIFT**

(45) Veröffentlichungstag der Patentschrift: **03.07.91**

(51) Int. Cl.5: **C09K 3/10**, B01D 59/00, G21F 1/10

(21) Anmeldenummer: **86105055.7**

(22) Anmeldetag: **12.04.86**

# (54) Dichtungsmaterial aus Fluorelastomeren und dessen Verwendung.

(30) Priorität: **15.07.85 DE 3525203**

(43) Veröffentlichungstag der Anmeldung:
**21.01.87 Patentblatt 87/04**

(45) Bekanntmachung des Hinweises auf die Patenterteilung:
**03.07.91 Patentblatt 91/27**

(84) Benannte Vertragsstaaten:
**CH DE FR GB IT LI NL**

(56) Entgegenhaltungen:
**DE-A- 3 338 122**
**FR-A- 2 356 344**

(73) Patentinhaber: **KERNFORSCHUNGSZENTRUM KARLSRUHE GMBH**
**Weberstrasse 5 Postfach 3640**
**W-7500 Karlsruhe 1(DE)**

Patentinhaber: **Höfert, Gerd**
**Fasanenweg 8**
**W-2070 Ahrensburg(DE)**

Patentinhaber: **STEAG Kernenergie GmbH**
**Bismarckstrasse 54**
**W-4300 Essen 1(DE)**

(72) Erfinder: **Bacher, Walter, Dr.**
**Hans-Thoma-Strasse 3f**
**W-7513 Stutensee-4(DE)**
Erfinder: **Bier, Wilhelm, Dr.**
**Grabener Weg 10**
**W-7514 Eggenstein-Leopoldshafen(DE)**
Erfinder: **Treffner, Franz-Willi**
**Overdykerstrasse 93**
**W-4630 Bochum(DE)**
Erfinder: **Höfert, Gerd**
**Fasanenweg 8**
**W-2070 Ahrensburg(DE)**

EP 0 208 844 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Beschreibung

Die Erfindung betrifft ein Dichtungsmaterial aus Fluorelastomeren für technische Anlagen, in denen Uranhexafluorid und/oder hydrolysierbare gasförmige Fluorierungsmittel eingesetzt werden, sowie dessen Verwendung in solchen Anlagen.

Aus der FR-A-2356344 ist bekannt, zur Herstellung von Diffusionsrohren für die Trennung von Uranisotopen röhrenförmige mikroporöse Keramikwerkstücke mit metallischen Endstücken zu verschließen, wobei neben einer besonderen konstruktiven Ausgestaltung der metallischen Endstücke eine Abdichtung der Komponenten durch ein thermoplastisches Material, insbesondere durch fluorierte Polymere oder Copolymere, vorgesehen wird.

Weiterhin ist die Verwendung von handelsüblichen Fluorelastomeren, wie z. B. solche mit den Handelsbezeichnungen Viton$^R$, Technoflon$^R$ etc., als Dichtungsmaterial in Anlagen, in denen $UF_6$ gehandhabt wird, bekannt. Dichtungen aus solchem Material werden sowohl zwischen dem Verfahrensgas ($UF_6$ allein oder $UF_6$ mit Zusatzgasen) und der Atmosphäre als auch intern zwischen Strömen verschiedener $UF_6$-Konzentrationen bzw. Isotopenkonzentrationen eingesetzt, beispielsweise in Isotopentrennanlagen.

Der große Nachteil der bisher eingesetzten Fluorelastomere ist der, daß sie mit im technischen $UF_6$ stets vorhandenen Fluorwasserstoff bereits bei Raumtemperatur chemisch reagieren und sich mit dem HF unter Bildung von Wasser umsetzen. Genauer ausgedrückt sind es die für den Herstellungsvorgang der Fluorelastomere erforderlichen Zusätze an stark basischen Fluorwasserstoff-Bindemittel, in der Regel Oxide, Hydroxide und/oder Carbonate von Erdalkalimetallen oder ähnliche Verbindungen, die sich mit dem Fluorwasserstoff aus dem $UF_6$-Gas umsetzen. Bei dieser Reaktion wird $H_2O$ schematisch nach der Gleichung

$$Me(OH)_2 + 2\ HF \longrightarrow MeF_2 + 2\ H_2O \qquad (1)$$

gebildet. Dieses Wasser reagiert in der umgebenden Gasphase mit $UF_6$ nach

$$UF_6 + 2\ H_2O \longrightarrow UO_2F_2 + 4\ HF \qquad (2)$$

Das hierbei entstehende HF kann wiederum nach (1) $H_2O$ bilden, so daß es zu einer fortlaufenden $UF_6$-Zersetzung kommen kann.

Das $UO_2F_2$ aus Reaktion (2) fällt als Staub an, der sich früher oder später in empfindlichen Bereichen, z.B. in den Trennstrukturen von Isotopentrennanlagen (Gasdiffusionsverfahren, Trenndüsenverfahren) ablagern und diese teilweise verstopfen oder durch Belagbildung in ihren mechanischen Eigenschaften verändern kann (Gasultrazentrifugenverfahren).

Zur Vermeidung dieser Nachteile wurden anstelle von Elastomerdichtungen Metalldichtungen verwendet. Der Einsatz von Metalldichtungen verlangt jedoch teilweise aufwendige, konstruktive Änderungen, um die erforderlichen hohen Verformungskräfte aufzunehmen. Außerdem erfordern Metalldichtungen einen höheren Kostenaufwand als die Elastomerdichtungen.

Aus der DE-A-3338122 ist eine selbsthaftende plastische Masse zur Abschirmung radioaktiver Strahlung bekannt, die Bleioxid und einen plastischen Kunststoff enthält. Diese plastische Masse wird außen an Rohrleitungen etc. angebracht und kommt mit den Chemikalien in den Rohrleitungen nicht in Kontakt.

Der Erfindung liegt die Aufgabe zugrunde, die Nachteile bei der Verwendung herkömmlicher Fluorelastomere in Anlagen zur Handhabung von Uranhexafluorid zu vermeiden, insbesondere ein Dichtungsmaterial anzugeben, an dem die Bildung von Hydrolyseprodukten aus $UF_6$ durch Wasser aus der Reaktion zwischen dem im technischen Verfahrensgas $UF_6$ stets vorhandenen Fluorwasserstoff und dem im Fluorelastomer herstellungsbedingt vorhandenen Metalloxid weitestgehend unterbunden ist.

Die Aufgabe wird in überraschend einfacher Weise durch ein Dichtungsmaterial gelöst, in dem den Fluorelastomeren ein Anteil von PbO zugesetzt ist, der einem Pb-Anteil in den Fluorelastomeren im Bereich von 1 Gew.-% bis 10 Gew.-% entspricht, sowie durch die Verwendung solcher PbO-haltiger Fluorelastomere als Material für Dichtungen in technischen Anlagen, in denen Uranhexafluorid und/oder hydrolysierbare gasförmige Fluorierungsmittel eingesetzt werden.

Besonders bevorzugt ist die Verwendung von Fluorelastomeren mit einem Gehalt von PbO, der einem Pb-Anteil im Fluorelastomer im Bereich von 1 Gew.-% bis 5 Gew.-% entspricht. Die optimale Lösung ist die Verwendung eines Fluorelastomers, dem 3 Gew.-% PbO während des Herstellungsprozesses zugemischt worden sind. Selbst bei Langzeitkontakt mit technischem $UF_6$ wurde keine Hydrolysestaubbildung beobachtet.

Die mit dem erfindungsgemäßen Dichtungsmaterial erzielten Vorteile sind darin zu sehen, daß

die hinsichtlich Shore-Härte, Rückprallelastizität etc. für den speziellen Dichtungswerkstoff geforderten Eigenschaften erhalten bleiben,

die Staubbildung, die z.B. in Isotopentrennanlagen zu störenden Ablagerungen in den Isotopentrenneinheiten führt, selbst bei einem Einsatz der erfindungsgemäßen Dichtungsmaterialien im Temperaturbereich bis 50 °C in $UF_6$ bzw. $UF_6/H_2$-oder $UF_6$/He-Gemischen sich ausschließen läßt und bei Fluorierungsmitteln das Auftreten fester, schwerflüchtiger oder explosiver Hydrolyseprodukte zumindest im Bereich zwischen -50 °C und +50 °C vermeiden läßt und

sich die erfindungsgemäßen Dichtungsmaterialien aufgrund ihrer unverändert hohen Beständigkeit gegen Temperaturen, Lösungsmittel, Säuren und radioaktive Strahlung universell einsetzen lassen.

Grundsätzlich sind die erfindungsgemäßen Dichtungsmaterialien überall dort mit großem Vorteil gegenüber den bisher eingesetzten, handelsüblichen Dichtungen zu verwenden, wo Gasströme abzudichten sind, welche in Kontakt mit den Dichtungsmaterialien $H_2O$ freisetzen können und/oder die ihrerseits empfindlich sind für $H_2O$, d.h. mit diesem reagieren, wobei aus den Gasen als Hydrolyseprodukte Feststoffe oder auch schwerflüchtige oder explosive Substanzen gebildet werden können. Solche Gasströme können bestehen aus Fluorwasserstoff, $BF_3$, $SiF_4$, $MoF_6$, $WF_6$, Halogen-Fluoriden und anderen gasförmigen Fluorierungsmitteln oder aus Gasen, die die genannten Verbindungen als Zusätze oder als Verunreinigungen enthalten.

Von den erfindungsgemäß en Dichtmaterialien wird erwartet, daß sie im jahrelangen Dauerbetrieb (beispielsweise bis zu 10 Jahre) ihre vorteilhafte Eigenschaft als Langzeitwirkung beibehalten.

Im folgenden wird die Erfindung anhand einer Beschreibung zweier beispielhafter Versuche näher erläutert.

Versuch 1:

In einem Laborversuch wurden 2 g des erfindungsgemäßen Dichtmaterials mit 3 Gew.-% PbO mit 60 mbar $UF_6$ in einem Edelstahl-Reaktionsgefäß 2000 h lang beaufschlagt. Nach einer geringen Anfangsreaktion, die keine festen Uranverbindungen außerhalb des Elastomers lieferte ($UF_6$-Verlust und Gewichtszunahme des Elastomers stimmten genau überein), erfolgte keine weitere Reaktion mit dem $UF_6$. Auch der Zusatz von 5 Vol.-% HF zum $UF_6$ änderte nichts am stabilen Verhalten. Bei einem zu Vergleichszwecken nach der gleichen Methode ausgelagerten käuflichen Fluorelastomer zeigte sich nach 1000 h, daß das zugesetzte $UF_6$ verbraucht war. Feste Uranverbindungen hatten sich um das Elastomermaterial abgelagert.

Versuch 2:

Ein Dauertest über 2000 h in einer technischen Trenndüsenstufe, deren Trennelementgrundeinheiten mit einem Dichtungsmaterial aus Fluorelastomer mit 3 Gew.-% PbO ausgerüstet waren (Gesamtmenge an Fluorelastomer ca. 1 kg) ließ keine Veränderung der Trenneigenschaften der Trennelemente außerhalb der Fehlergrenze erkennen. Vergleichbare Versuche mit kommerziellen Fluorelastomeren hatten in ähnlichen Zeiträumen zu erkennbaren Verschlechterungen der Trenneigenschaften geführt.

## Ansprüche

1. Dichtungsmaterial aus Fluorelastomeren für technische Anlagen, in denen Uranhexafluorid und/oder hydrolysierbare gasförmige Fluorierungsmittel eingesetzt werden, dadurch gekennzeichnet, daß den Fluorelastomeren ein Anteil von PbO zugesetzt ist, der einem Pb-Anteil in den Fluorelastomeren im Bereich von 1 Gew.-% bis 10 Gew.-% entspricht.

2. Verwendung von Fluorelastomeren mit einem Anteil von PbO, der einem Pb-Anteil in den Fluorelastomeren von 1 Gew.-% bis 10 Gew.-% entspricht, als Material für Dichtungen in technischen Anlagen, in denen Uranhexafluorid und/oder hydrolysierbare gasförmige Fluorierungsmittel eingesetzt werden.

## Claims

1. Sealing material formed from fluoroelastomeric materials for technical systems, in which uranium hexafluoride and/or hydrolyzable gaseous fluorinating agents are used, characterised in that a portion of PbO is added to fluoroelastomeric materials and corresponds to a Pb portion in the fluoroelastomeric materials in the range of 1 % by wt. to 10 % by wt.

2. Use of fluoroelastomeric materials having a portion of PbO, which corresponds to a Pb portion in the fluoroelastomeric materials of 1 % by wt. to 10 % by wt., as the material for seals in technical systems, in which uranium hexafluoride and/or hydrolyzable gaseous fluorinating agents are used.

## Revendications

1. Matériau d'étanchéité à base d'élastomères fluorés pour installations industrielles dans lesquelles on utilise de l'hexafluorure d'uranium et/ou un agent de fluoration gazeux hydrolysable, caractérisé en ce qu'est ajoutée aux élastomères fluorés une quantité de PbO qui correspond à une proportion de Pb dans les élastomères fluorés située dans la plage de 1 à 10 % en poids.

2. Utilisation d'élastomères fluorés comportant une proportion de PbO qui correspond à une proportion de Pb dans les élastomères fluorés allant de 1 à 10 % en poids, en tant que matériau pour joints d'étanchéité dans des installations industrielles dans lesquelles sont utilisés de l'hexafluorure d'uranium et/ou un agent de fluoration gazeux hydrolysable.